# EUROPÄISCHE PATENTANMELDUNG

(11) **EP 4 682 088 A1**
(43) Veröffentlichungstag der Anmeldung: **21.01.2026**
(21) Anmeldenummer: 25185485.7
(22) Anmeldetag: 26.06.2025
(51) Int. Cl.: B65G 1/04, B60P 1/43

(54) **MÖBELBEHÄLTER FÜR EINEN MOBILEN MÖBELAUFZUG**

(30) Priorität: 19.07.2024 DE 102024120512
(71) Anmelder: Klaas-Alu-Kranbau GmbH, 59387 Ascheberg (DE)
(72) Erfinder: Kreickmann, Janis, 59387 Ascheberg (DE); Wagner, Patrick, 59387 Ascheberg (DE)
(74) Vertreter: Patentanwälte Olbricht Buchhold Keulertz

(57) **Zusammenfassung**

Die Erfindung betrifft einen Möbelbehälter (2) für einen mobilen Möbelaufzug. Der Möbelbehälter weist einen Behälterboden (4), der eine Bodenfläche (6) aufweist, die in einer Bodenebene (BE) angeordnet ist, und eine Ladeklappe (8) auf. Die Ladeklappe ist relativ zum Behälterboden (4) um eine Klappachse (KA) von einer Ladestellung, in der Möbel (10) in eine zur Bodenebene (BE) parallele Beladerichtung (BR) über eine Ladeklappenfläche (12) der Ladeklappe (8), die zur Beladerichtung (BR) parallel ausgerichtet ist, auf den Behälterboden (4) ladbar sind, in eine Schließstellung, in der die Ladeklappenfläche (12) angewinkelt zur Beladerichtung (BE) ausgerichtet ist, schwenkbeweglich gelagert. Erfindungsgemäß weist der Möbelbehälter zumindest ein zumindest relativ zum Behälterboden (4) um eine Rollachse (RA), die zur Beladerichtung (BR) angewinkelt ausgerichtet ist, drehbar gelagertes und zumindest in der Ladestellung der Ladeklappe (8) von der Bodenebene (BE) geschnittenes Laderollelement (14) auf.

## Beschreibung

Die Erfindung betrifft einen Möbelbehälter für einen mobilen Möbelaufzug. Der Möbelbehälter umfasst einen Behälterboden, der eine Bodenfläche aufweist. Die Bodenfläche ist in einer Bodenebene angeordnet. Der Möbelbehälter weist weiterhin eine Ladeklappe auf. Die Ladeklappe ist relativ zum Behälterboden um eine Klappachse von einer Ladestellung in eine Schließstellung schwenkbeweglich gelagert. In der Ladestellung sind Möbel in eine zur Bodenebene parallele Beladerichtung über eine Ladeklappenfläche der Ladeklappe auf den Behälterboden ladbar. Die Ladeklappenfläche ist in der Ladestellung parallel zur Beladerichtung ausgerichtet. In der Schließstellung ist die Ladeklappenfläche angewinkelt zur Beladerichtung ausgerichtet.

Ein derartiger Möbelbehälter ist bekannt. Im Einsatz dient er zum Transport von Möbeln. Konkret wird der Möbelbehälter hierzu üblicherweise auf eine Schienenvorrichtung aufgesetzt, mit der er einen Möbelaufzug ausbildet. Der Möbelbehälter ist derart beweglich an der Schienenvorrichtung gelagert, dass der Möbelbehälter auf- und abwärts verfahrbar ist. Dadurch lassen sich in Bodennähe auf den Behälterboden geladene Möbelstücke anheben und beispielsweise in den Bereich von Fensteröffnungen höhergelegener Stockwerke von Wohnhäusern verbringen, um dort entladen zu werden.

In der Schließstellung verhindert die Ladeklappe ein unbeabsichtigtes Hinabfallen des anzuhebenden Möbelstücks von dem Behälterboden. Um das Möbelstück auf den Behälterboden laden oder vom Behälterboden entladen zu können, ist die Ladeklappe in die Ladestellung zu verschwenken. Anschließend wird das Möbelstück in der Praxis in die oder entgegen der Beladerichtung über die Ladeklappenfläche auf den oder vom Behälterboden geschoben. Nachteilig hierbei ist, dass eine erhebliche Reibung zwischen dem Möbelstück und dem Behälterboden sowie der Ladeklappe entsteht, weshalb ein großer manueller Kraftaufwand zum Be- und Entladen des Möbelbehälters erforderlich ist. Mit dem hohen Kraftaufwand geht insbesondere beim Einsatz des Möbelbehälters in großer Höhe ein erhebliches Verletzungsrisiko für den Nutzer einher. Besonders nachteilig ist beim bekannten Möbelbehälter, dass das Möbelstück beim Be- bzw. Entladen regelmäßig vor eine Kante des Behälterbodens beziehungsweise der Ladeklappe in den Bereich stößt, in dem der Behälterboden und die Ladeklappe einander am nächsten sind. Dies erfordert ein Anheben des Möbelstücks beim Be- bzw. Entladen und damit weiteren erheblichen Kraftaufwand. Die Aufgabe der Erfindung die Bereitstellung sowohl eines Möbelbehälters als auch eines Möbelaufzugs, durch die die vorbeschriebenen Nachteile zu vermeiden sind.

Erfindungsgemäß weist der Möbelbehälter zumindest ein Laderollelement auf, das zumindest relativ zum Behälterboden um eine Rollachse drehbar gelagert ist. Die Rollachse ist zur Beladerichtung angewinkelt ausgerichtet. Zumindest in der Ladestellung der Ladeklappe wird das Laderollelement von der Bodenebene geschnitten.

Durch die erfindungsgemäße Ausbildung des Möbelbehälters wird sein Be- und Entladen wesentlich erleichtert. Das jeweilige Möbelstück ist dabei auf das zumindest eine von unten durch die Bodenebene hervorstehende Laderollelement aufzulegen. Anschließend ist das Möbelstück mittels des Laderollelementes am Möbelbehälter, zumindest anteilig, in die Beladerichtung bzw. entgegen der Beladerichtung abzurollen. Dadurch sind die das Be- bzw. Entladen bisher erschwerende Reibung und der Kraftaufwand zu ihrer Überwindung massiv reduziert und ist die Möglichkeit zu einem einfachen Be- und Entladen gattungsgemäßer Möbelbehälter geschaffen.

Bei dem Möbelbehälter handelt es sich insbesondere um einen Förderschlitten für einen mobilen Möbelaufzug. Bei dem mobilen Möbelaufzug handelt es sich insbesondere um einen Möbellift, bevorzugt um einen Schrägaufzug. Alternativ kann der Möbelaufzug beispielsweise auch als Vertikalaufzug ausgebildet sein.

Der Behälterboden ist bevorzugt mit einer geschlossenen Bodenfläche ausgebildet. Die Bodenfläche ist insbesondere durch eine Mehrzahl metallischer Paneele ausgebildet. Je nach Anwendungsfall ist die Bodenfläche vorzugsweise durch zumindest eine Ausnehmung unterbrochen ausgebildet. Die Bodenfläche ist bevorzugt rechteckig ausgebildet. Die Ladeklappe ist vorzugsweise an einer sich in eine Längsrichtung erstreckenden Längsseite der Bodenfläche angeordnet. Die Längserstreckung der Bodenfläche übersteigt bevorzugt die Längserstreckung der Ladeklappe.

Die Beladerichtung ist bevorzugt rechtwinklig zur Längsrichtung der Bodenfläche ausgerichtet. In der Ladestellung ist die Ladeklappe bevorzugt derart positioniert, dass die Ladeklappe nicht von der Bodenebene geschnitten wird, sodass Möbelstücke seitlich in die Beladerichtung auf die Bodenfläche geschoben werden können.

Die Ladeklappe ist insbesondere eine Frontklappe. Vorzugsweise weist der Möbelbehälter eine Arretierungsvorrichtung auf, durch die die Ladeklappe in der Ladestellung und/oder in der Schließstellung arretierbar ist. In der Schließstellung erstreckt sich die Ladeklappe bevorzugt seitlich oberhalb der Bodenfläche, um eine unbeabsichtigte Bewegung des Möbelstücks entgegen der Beladerichtung zu vermeiden. Vorzugsweise erstreckt sich die Ladeklappenfläche in der Schließstellung der Ladeklappe rechtwinklig zur Beladerichtung. In der Ladestellung erstreckt sich die Ladeklappenfläche bevorzugt parallel zur Bodenebene oder in der Bodenebene.

Die Ladeklappe ist bevorzugt an dem Behälterboden schwenkbeweglich gelagert. Vorzugsweise ist die Ladeklappe vom Behälterboden demontierbar. Vorzugsweise ist die Ladeklappe aus der Schließstellung über die Ladestellung hinaus schwenkbeweglich, insbesondere um insgesamt zumindest 180°.

Die Ladeklappenfläche ist bevorzugt rechteckig ausgebildet. Eine Erstreckung der Ladeklappenfläche in die Längsrichtung der Bodenfläche beträgt bevorzugt weniger als 500 mm. Die Erstreckung der Bodenfläche in die Längsrichtung beträgt bevorzugt mehr als 1.000 mm.

Die Klappachse ist bevorzugt unterhalb der Bodenebene angeordnet. Besonders bevorzugt ist die Klappachse seitlich versetzt zur Bodenfläche angeordnet. Insbesondere verläuft die Klappachse in einer Draufsicht und bei Anordnung der Ladeklappe in der Ladestellung zwischen der Ladeklappenfläche und der Bodenfläche hindurch. Die Draufsicht ist dabei so zu verstehen, dass die Sichtrichtung rechtwinklig zur Bodenebene ausgerichtet ist.

Über die Ladeklappe hinaus weist der Möbelbehälter bevorzugt drei weitere Seitenwände oder Klappen auf, die je einer Seite der rechteckigen Bodenfläche zugeordnet sind. Diese drei weiteren Seitenwände sind bevorzugt von einer Schließstellung in eine Flachstellung beweglich. In der Flachstellung vergrößern Oberflächen der Seitenwände die Bodenfläche in der Bodenebene, um auch solche Möbelstücke transportieren zu können, deren Grundfläche die Größe der Bodenfläche allein des Behälterbodens übersteigt.

Die Rollachse ist insbesondere rechtwinklig zur Beladerichtung und/oder parallel zur Längsrichtung der Bodenfläche und/oder zur Bodenebene ausgerichtet. Bevorzugt ist die Rollachse derart unterhalb der Bodenebene angeordnet, dass die Bodenebene das Laderollelement zwischen der Rollachse und einem oberen Ende des Laderollelementes schneidet und ein überwiegender Teil des Laderollelementes, zumindest wenn die Ladeklappe in der Ladestellung angeordnet ist, unterhalb der Bodenebene angeordnet ist.

Das Laderollelement ist bevorzugt als Rolle oder Walze ausgebildet. Alternativ kann das Laderollelement bevorzugt als Rad ausgebildet sein. Das Laderollelement ist insbesondere aus verzinktem Stahl oder aus einem Kunststoff ausgebildet. Vorzugsweise ist das Laderollelement derart geformt, dass in einem Querschnitt eine Außenkontur des Laderollelementes rund ist. Bevorzugt ist die Querschnittsform des Laderollelementes in die axiale Richtung unveränderlich. Besonders bevorzugt weist der erfindungsgemäße Möbelbehälter eine Mehrzahl von Laderollelementen auf. Das Vorbeschriebene gilt auch bei einem Ersatz der Beladerichtung durch eine Entladerichtung, die der Beladerichtung entgegengerichtet ist.

Bevorzugt ist die Rollachse in der Draufsicht neben der Bodenfläche angeordnet. Die Anordnung der Rollachse neben der Bodenfläche ist so zu verstehen, dass die Rollachse die Bodenfläche in der Draufsicht nicht schneidet, sondern insgesamt von der Bodenfläche beabstandet ist. Alternativ oder zusätzlich ist die Rollachse in der Draufsicht bevorzugt neben der Ladeklappenfläche der Ladeklappe angeordnet, während sich die Ladeklappe in der Ladestellung befindet. Insbesondere verläuft die Rollachse also in der Draufsicht zwischen der Bodenfläche und der Ladeklappenfläche der Ladeklappe in der Ladestellung hindurch. Dadurch lässt sich besonders wirksam erreichen, dass ein Anstoßen von Möbelstücken an Kanten des Möbelbehälters vermieden wird, da das Laderollelement gerade in der Nähe dieser Kanten positioniert ist. Besonders bevorzugt sind die Klappachse und die Rollachse koaxial ausgebildet. Dadurch lässt sich der vorgenannte Vorteil weitestmöglich umsetzen. Alternativ zum Vorstehenden ist die Rollachse optional derart positioniert, dass sie in der Draufsicht die Bodenfläche oder die Ladeklappenfläche schneidet, wobei das Laderollelement insbesondere in den Behälterboden oder in die Ladeklappe eingelassen ist. Insgesamt sind die Rollachse und die Klappachse als theoretische Achsen im geometrischen Sinne und nicht als Elemente mit einer körperlichen Erstreckung zu verstehen.

Vorzugsweise weist der Möbelbehälter ein Lagerelement auf, durch das die Ladeklappe und das Laderollelement am Behälterboden gelagert sind. Das Lagerelement übernimmt somit zwei Funktionen und macht mehrere Lagerelemente, durch die ausschließlich entweder die Ladeklappe oder das Laderollelement gelagert sind, überflüssig. Dadurch lässt sich eine kompakte Bauform erreicht und lässt sich das Laderollelement besonders nahe an den zu überbrückenden Kanten positionieren.

Bevorzugt weist der Möbelbehälter zwei sowohl die Ladeklappe als auch das Laderollelement lagernde Lagerelement auf, die in die Längsrichtung versetzt zueinander angeordnet sind. Bei dem zumindest einen Lagerelement handelt es sich insbesondere um einen Achskörper oder um einen Stift, besonders bevorzugt mit einem Durchmesser von 8 mm, der sich durch Ausnehmungen in der Ladeklappe und/oder im Behälterboden und/oder im Laderollelement erstreckt.

Das Lagerelement ist bevorzugt zumindest teilweise innerhalb des Laderollelementes gelagert. Das Lagerelement ist vorzugsweise axial verschieblich relativ zum Laderollelement gelagert. Somit lassen sich das Laderollelement und das Lagerelement als vorgefertigte Einheit montieren. Besonders bevorzugt weist der Möbelbehälter ein Rückstellelement zur Rückstellung des Lagerelementes in eine Lagerstellung auf. Das Rückstellelement ist insbesondere zwischen dem Lagerelement und dem Laderollelement angeordnet. Das Rückstellelement bewirkt insbesondere eine Bewegung des Lagerelementes in eine axiale Richtung vom Laderollelement weg, sodass das Lagerelement nach einem manuellen Eindrücken in das Laderollelement automatisch in die Lagerstellung übergeht und dabei Ausnehmungen des Behälterbodens und der Ladeklappe durchdringt und die Lagerstellung erreicht, in der es ohne weitere äußere Einwirkungen verbleibt. Insbesondere ermöglicht das Lagerelement eine einfache Demontage der Ladeklappe. Dazu ist das Lagerelement aus der Lagerstellung entgegen einer Kraft des Rückstellelementes aus der Ausnehmung der Ladeklappe zu bewegen, die Ladeklappe in Bezug auf die Klappachse radial zu entfernen und das Lagerelement loszulassen, sodass es durch das Rückstellelement in die Lagerstellung zurückgestellt wird. Auf diese Weise ist das Laderollelement auch ohne die Ladeklappe einzusetzen.

Vorzugsweise ist ein Radius des Laderollelementes größer als ein Abstand zwischen der Bodenebene und der Rollachse. Der Radius und der Abstand stehen besonders bevorzugt in einem Verhältnis von zumindest 1,1, insbesondere von zumindest 1,3, und/oder von höchstens 2, insbesondere von höchstens 1,5, zueinander. Der Durchmesser des Laderollelementes beträgt vorzugsweise zumindest 20 mm und/oder höchstens 40 mm, insbesondere 30 mm. Der Radius ist insbesondere um 4 mm größer als der Abstand zwischen der Bodenebene und der Rollachse. Der Durchmesser ist dabei insbesondere größer als die Dicke der Ladeklappe. In Erprobungen des erfindungsgemäßen Möbelbehälters hat sich herausgestellt, dass die Erleichterung des Be- und Entladens bei Verwendung der vorgenannten Maße optimiert ist.

Bevorzugt hat das Laderollelement eine axiale Erstreckung, die zumindest 50 %, besonders bevorzugt zumindest 80 %, insbesondere zumindest 90 %, der Erstreckung der Ladeklappenfläche in eine zur Rollachse parallele Richtung entspricht. Mit der axialen Erstreckung des Laderollelementes ist seine Erstreckung in dieselbe Richtung gemeint. Das Laderollelement hat also eine Länge, die möglichst annähernd der Länge der Ladeklappenfläche und damit insbesondere der Ladeklappe entspricht. Damit kann das Be- und Entladen zumindest annähernd über die gesamte Länge der Ladeklappe erleichtert werden.

Alternativ zur genannten Länge des Laderollelementes weist der Möbelbehälter bevorzugt eine Mehrzahl von Laderollelementen auf, die um dieselbe Rollachse drehbar und axial zueinander versetzt angeordnet sind. Alternativ oder zusätzlich weist der Möbelbehälter eine Mehrzahl von Laderollelementen auf, die um zueinander parallele Rollachsen drehbar und in die Beladerichtung zueinander versetzt angeordnet sind.

Die Aufgabe wird weiterhin gelöst durch einen mobilen Möbelaufzug, der eine Schienenvorrichtung und einen vorbeschriebenen Möbelbehälter umfasst. Der Möbelbehälter ist in eine Bewegungsrichtung beweglich an der Schienenvorrichtung gelagert. Insbesondere ist der Möbelbehälter derart gelagert, dass er in die Bewegungsrichtung zumindest abschnittsweise gradlinig und translatorisch beweglich ist, sodass die Bodenebene parallel zu einem Boden, auf dem der Möbelaufzug abgestellt ist, verbleiben kann. Insbesondere ist die Bewegungsrichtung um weniger als 90°, insbesondere um weniger als 80°, 70° oder 60°, zur Bodenebene angewinkelt. In diesem Fall handelt es sich bei dem Möbelaufzug um einen Schrägaufzug. Die Ladeklappe ist insbesondere derart angeordnet, dass sie der Schienenvorrichtung zugewandt ist.

Weitere Einzelheiten und Vorteile der Erfindung lassen sich den schematisch dargestellten Fig. entnehmen; es zeigen:
- Fig. 1: einen erfindungsgemäßen Möbelbehälter mit einem Möbelstück und geschlossener Ladeklappe,
- Fig. 2: eine teilweise Schnittdarstellung des Möbelbehälters gemäß Fig. 1,
- Fig. 3: den Möbelbehälter gemäß Fig. 1 mit geöffneter Ladeklappe,
- Fig. 4: den Möbelbehälter gemäß Fig. 3 nach einer Bewegung des Möbelstücks in eine Entladerichtung,
- Fig. 5: den Möbelbehälter gemäß Fig. 1 mit demontierter Ladeklappe,
- Fig. 6: den Möbelbehälter gemäß Fig. 1 mit ausgeklappten Seitenwänden.

Die nachfolgend beschriebenen Merkmale des dargestellten Ausführungsbeispiels können auch einzeln oder in anderen Kombinationen als dargestellt zu erfindungsgemäßen Weiterbildungen führen. Gleich oder ähnlich wirkende Elemente sind mit identischen Bezugsziffern versehen.

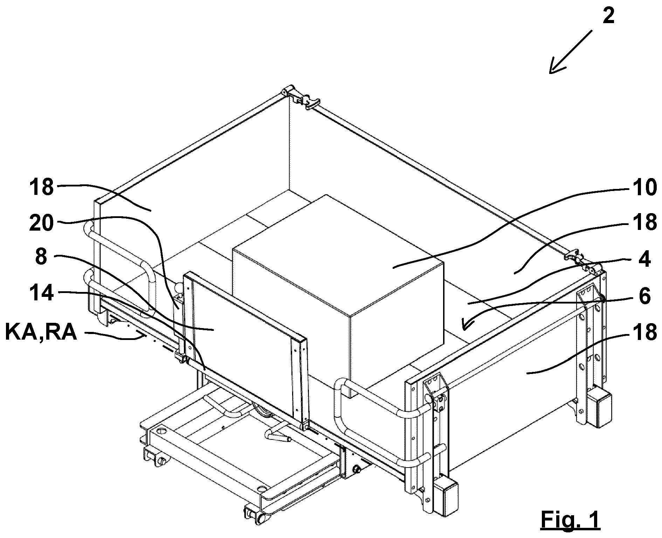

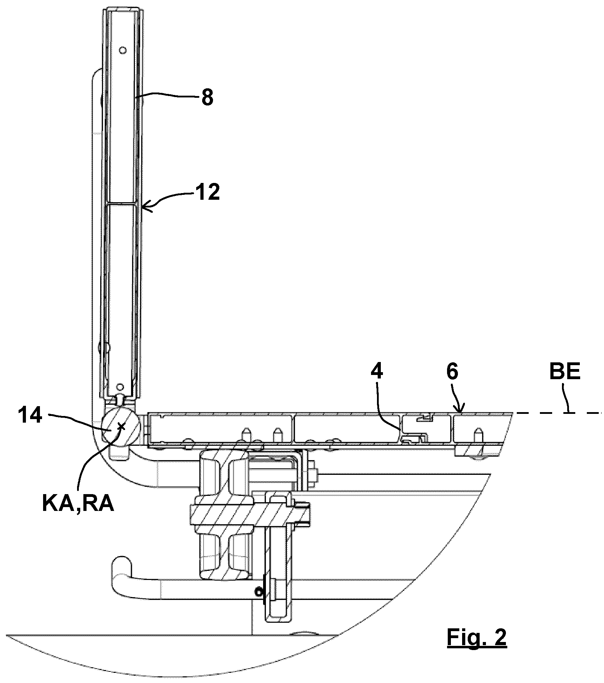

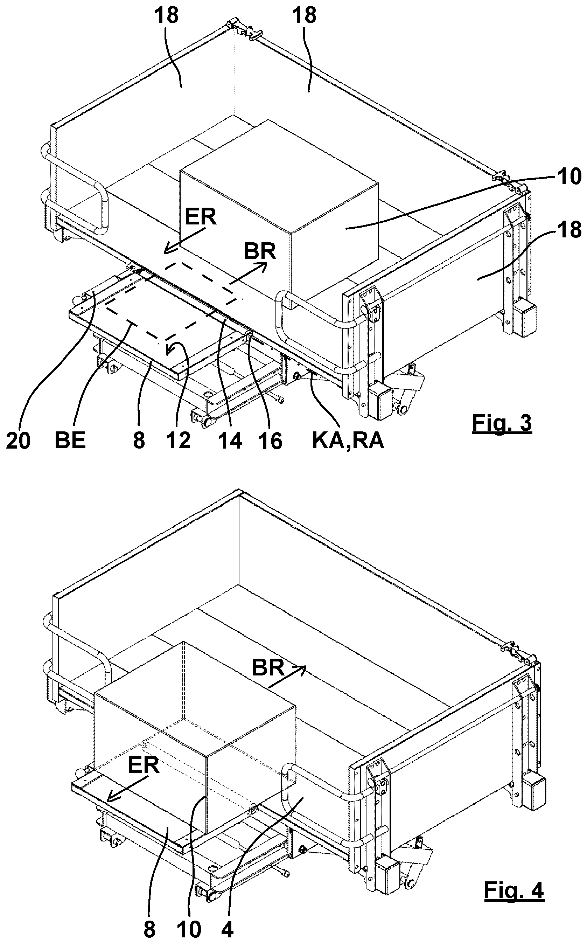

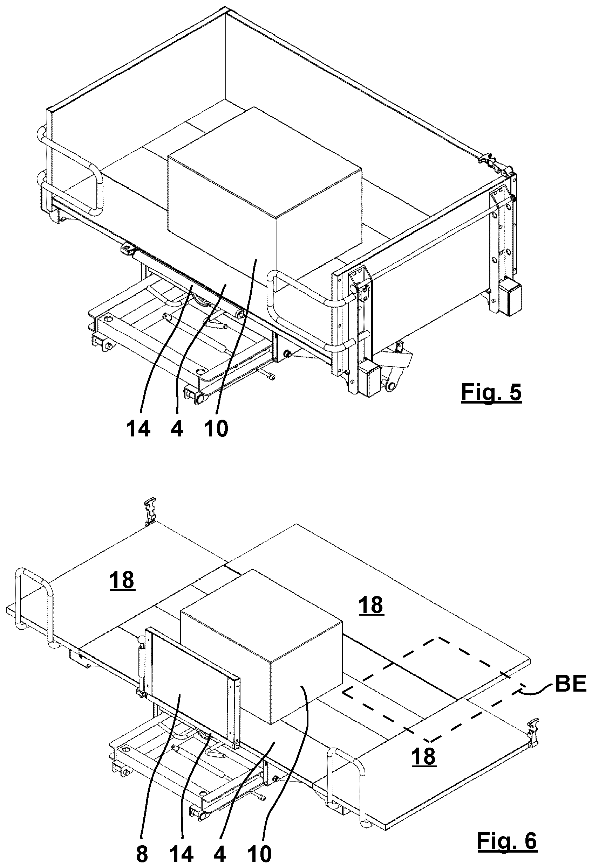

Die Fig. 1 und 3 bis 6 sind Übersichtsdarstellungen eines erfindungsgemäßen Möbelbehälters 2 für einen nicht dargestellten Schrägaufzug. Der Möbelbehälter 2 weist einen Behälterboden 4 mit einer Bodenfläche 6 auf, die in einer Bodenebene BE (siehe insbesondere Fig. 2 und 3) angeordnet ist. Ferner weist der Möbelbehälter 2 eine Ladeklappe 8 auf, die von einer Schließstellung (siehe Fig. 1, 2 und 6) in eine Ladestellung (siehe Fig. 3 und 4) schwenkbeweglich um eine Klappachse KA gelagert ist.

Auf der Bodenfläche 6 ist ein nicht von der Erfindung umfasstes Möbelstück 10 schematisch dargestellt. In der Ladestellung der Ladeklappe 8 ist das Möbelstück 10 in eine Entladerichtung ER über eine Ladeklappenfläche 12 der Ladeklappe 8 zu entladen und in eine Beladerichtung BR über die Ladeklappenfläche 12 zu beladen (siehe Fig. 3 und 4). Die Ladeklappenfläche 12 ist in der Ladestellung der Ladeklappe 8 in der Bodenebene BE angeordnet und in der Schließstellung der Ladeklappe 8 um 90° angewinkelt zur Bodenebene BE ausgerichtet.

Bei Anordnung der Ladeklappe 8 in der Ladestellung ist zwischen der Ladeklappe 8 und dem Behälterboden 4 ein Laderollelement 14 angeordnet. Das Laderollelement 14 ist relativ zum Behälterboden 4 und zur Ladeklappe 8 um eine Rollachse RA drehbar gelagert, die koaxial mit der Klappachse KA und parallel zur Bodenebene BE ausgerichtet ist. Eine in Richtung der Rollachse RA gemessene Länge des Laderollelementes 14 stimmt im Wesentlichen mit der in die gleiche Richtung gemessenen Länge der Ladeklappe 8 überein. Das Laderollelement 14 wird zwischen der Rollachse RA und einem der Ladeklappe 8 in der Schließstellung zugewandten Ende des Laderollelementes 14 von der Bodenebene BE geschnitten.

In dem Laderollelement 14 ist ein als Lagerzapfen ausgebildetes Lagerelement 16 angeordnet. Das Lagerelement 16 wird durch ein nicht dargestelltes Rückstellelement in eine Lagerstellung 16 rückgestellt, in der es beispielsweise in Fig. 3 dargestellt ist. In dieser Lagerstellung ragt das Lagerelement durch Ausnehmungen sowohl der Ladeklappe 8 als auch des Behälterbodens 4.

### Bezugszeichenliste

- 2: Möbelbehälter
- 4: Behälterboden
- 6: Bodenfläche
- 8: Ladeklappe
- 10: Möbel
- 12: Ladeklappenfläche
- 14: Laderollelement
- 16: Lagerelement
- 18: Seitenwände
- 20: Arretiervorrichtung
- BE: Bodenebene
- BR: Beladerichtung
- ER: Entladerichtung
- KA: Klappachse
- RA: Rollachse

## Patentansprüche

1. Möbelbehälter (2) für einen mobilen Möbelaufzug, aufweisend einen Behälterboden (4), der eine Bodenfläche (6) aufweist, die in einer Bodenebene (BE) angeordnet ist, und eine Ladeklappe (8), die relativ zum Behälterboden (4) um eine Klappachse (KA) von einer Ladestellung, in der Möbel (10) in eine zur Bodenebene (BE) parallele Beladerichtung (BR) über eine Ladeklappenfläche (12) der Ladeklappe (8), die zur Beladerichtung (BR) parallel ausgerichtet ist, auf den Behälterboden (4) ladbar sind, in eine Schließstellung, in der die Ladeklappenfläche (12) angewinkelt zur Beladerichtung (BE) ausgerichtet ist, schwenkbeweglich gelagert ist,
**gekennzeichnet durch**
zumindest ein zumindest relativ zum Behälterboden (4) um eine Rollachse (RA), die zur Beladerichtung (BR) angewinkelt ausgerichtet ist, drehbar gelagertes und zumindest in der Ladestellung der Ladeklappe (8) von der Bodenebene (BE) geschnittenes Laderollelement (14).

2. Möbelbehälter nach Anspruch 1, **dadurch gekennzeichnet, dass** die Rollachse (RA) parallel zur Bodenebene (BE) ausgerichtet ist.

3. Möbelbehälter nach einem der vorhergehenden Ansprüche, **dadurch gekennzeichnet, dass** die Rollachse (RA) in einer Draufsicht neben der Bodenfläche (6) angeordnet ist.

4. Möbelbehälter nach einem der vorhergehenden Ansprüche, **dadurch gekennzeichnet, dass** die Rollachse (RA) in der Draufsicht neben der Ladeklappenfläche (12) der Ladeklappe (8) in der Ladestellung angeordnet ist.

5. Möbelbehälter nach einem der vorhergehenden Ansprüche, **dadurch gekennzeichnet, dass** die Klappachse (KA) koaxial mit der Rollachse (RA) ausgerichtet ist.

6. Möbelbehälter nach einem der vorhergehenden Ansprüche, **gekennzeichnet durch** eine Lagerelement (16), mittels dessen die Ladeklappe (8) und das Laderollelement (14) am Behälterboden gelagert sind.

7. Möbelbehälter nach Anspruch 6, **dadurch gekennzeichnet, dass** das Lagerelement (16) zumindest teilweise innerhalb des Laderollelementes (14) und axial verschieblich relativ zum Laderollelement (14) gelagert ist.

8. Möbelbehälter nach Anspruch 7, **gekennzeichnet durch** ein Rückstellelement zur Rückstellung des Lagerelementes (16) in eine Lagerstellung.

9. Möbelbehälter nach einem der vorhergehenden Ansprüche, **dadurch gekennzeichnet, dass** ein Radius des Laderollelementes (14) und ein Abstand zwischen der Bodenebene (BE) und der Rollachse (RA) in einem Verhältnis von zumindest 1,1, bevorzugt von zumindest 1,3, und/oder von höchstens 2, bevorzugt von höchstens 1,5, zueinander stehen.

10. Möbelbehälter nach einem der vorhergehenden Ansprüche, **dadurch gekennzeichnet, dass** das Laderollelement (14) eine axiale Erstreckung hat, die zumindest 50 %, bevorzugt zumindest 80 %, besonders bevorzugt zumindest 90 %, der Erstreckung der Ladeklappenfläche (12) in eine zur Rollachse (RA) parallele Richtung entspricht.

11. Mobiler Möbelaufzug mit einer Schienenvorrichtung und einem Möbelbehälter (2) nach einem der vorhergehenden Ansprüche, der in eine Bewegungsrichtung beweglich an der Schienenvorrichtung gelagert ist.

12. Möbelaufzug nach Anspruch 11, **gekennzeichnet durch** eine derartige Anordnung des Möbelbehälters (2) an der Schienenvorrichtung, dass die Bewegungsrichtung um weniger als 90° zur Bodenebene (BE) angewinkelt ist.
